# EUROPEAN PATENT APPLICATION

(11) **EP 4 718 220 A1**
(43) Date of publication of application: **01.04.2026**
(21) Application number: 24306597.6
(22) Date of filing: 30.09.2024
(51) Int. Cl.: G06F 3/041, G06F 3/044

(54) **TOUCH SENSOR CONTROLLER INCLUDING A LINE DRIVER AND METHOD OF CALIBRATION OF A LINE DRIVER**

(71) Applicant: NXP B.V., 5656 AG Eindhoven (NL)
(72) Inventor: Tourret, Jean-Robert, 31023 Toulouse (FR); Darthenay, Frederic, 31023 Toulouse (FR); Goussin, Franck, 31023 Toulouse (FR); Geffroy, Vincent, 31023 Toulouse (FR)
(74) Representative: Miles, John Richard

(57) **Abstract**

A touch sensor controller including a line driver and a method of calibrating a line driver for a touch panel are described. The line driver is configured to be coupled to a row or column of a touch panel, the method includes providing a line drive current and providing a sense current related to the drive current. The sense current values are digitized and an overload status determined dependent on the digitized sense current values. The line driver is controlled to increase or decrease the line drive current dependent on the overload status.

## Description

### FIELD

This disclosure relates to a touch sensor controller including a line driver and method of calibration of the line driver.

### BACKGROUND

Touch sensor controllers may measure the impedance change on each row and column of a touch panel to determine the location of one or several touch points. The exact impedance is not known and depends on the electrical characteristics of the touch panel. Each line driver for the respective line (row or column) is configured according to the impedance of the line. This configuration is programmed by the final user of the touch panel and is unique per line.

### SUMMARY

Various aspects of the disclosure are defined in the accompanying claims. In a first aspect there is provided a touch sensor controller comprising: a line driver having a line driver output configured to be coupled to a row or column of a touch panel and to provide a line drive current and a sense current output configured to output a sense current related to the line drive current; an analog to digital converter configured to receive the sense current and having a digital data output coupled to a controller, the digital data output configured to output a plurality of digitized sense current values; wherein the controller has a control output coupled to a drive current control input of the line driver and is configured to: determine an overload status dependent on the digitized sense current values; and adapt the line drive current dependent on the overload status.

In some embodiments, the touch sensor controller further comprises: an averaging module configured to receive the digitized sense current values and output an average of the digitized sense current values; a minimum overload detector configured to detect an overload when the average of digitized sense current values is below a minimum threshold value; a maximum overload detector configured to detect an overload when the average of digitized sense current values is above a maximum threshold value; and wherein the controller is further configured to determine an overload status in response to a number of overloads detected during a predetermined time period (T_AGC) exceeding a threshold overload value (OL_ACC_MAX) and increase a gain of the line driver in response to an overload status being determined.

In some embodiments, the analog to digital converter further comprises an overflow output coupled to the controller and wherein the controller is further configured to adapt the drive current dependent an overflow output value. In some embodiments, the controller is further configured to adapt the line drive current by setting a gain value and wherein the sense current is proportional to a ratio of the line drive current and the gain value.

In some embodiments the controller is further configured, during a calibration time to: (i) set a gain value of the line driver to an initial value; (ii) increment the gain value in response to an overload status being detected within a predetermined time period; and (iii) repeat step (ii) if a maximum gain value has not been reached.

In some embodiments, the line driver further comprises an operational transconductance amplifier (OTA) wherein a bias current (Iref) for the OTA is independent of an output stage biasing current (Idrv_dc) of the line driver. In some embodiments, the line driver further comprises an operational transconductance amplifier, OTA, (420) having a non-inverting input (408) configured to be coupled to a drive signal generator, an inverting input coupled to the line driver output (406), and an inverting output (410) and a non-inverting output (412) coupled to a respective input of a voltage-to-current module (414).

In some embodiments, the line driver further comprises: a first current mirror comprising a first PMOS transistor (MP1) and a second PMOS transistor (MP2), wherein a gain factor of the first PMOS transistor (MP1) is variable between 1 and N times the gain factor of the second PMOS transistor (MP2), a source of the first PMOS transistor (MP1) and the second PMOS transistor (MP2) is coupled to a supply rail (402), a drain of the first PMOS transistor is coupled to the line driver output (406), a drain of the second PMOS transistor is coupled to a gate of the first PMOS transistor (MP1) and a gate of the second PMOS transistor (MP2); a second current mirror comprising a first NMOS transistor (MN1) and a second NMOS transistor (MN2), wherein the gain factor of the first NMOS transistor (MN1) is variable between 1 and N times the gain factor of the second NMOS transistor (MN2) a source of the first NMOS transistor (MN1) and the second NMOS transistor (MN2) is coupled to a ground rail (418), a drain of the first NMOS transistor (MN1) is coupled to the line driver output (406), a drain of the second NMOS transistor (MN2) is coupled to a gate of the first NMOS transistor (MN1), a gate of the second NMOS transistor (MN2) and the inverting output of the OTA (420); a third current mirror comprising a third NMOS transistor (MN3) and a fourth NMOS transistor (MN4), a source of the third NMOS transistor (MN3) and the fourth NMOS transistor (MN4) is coupled to a ground rail (418), a drain of the third NMOS transistor is coupled to a non-inverting output (410) of the OTA, a gate of the third NMOS transistor (MN3), and a gate of the fourth NMOS transistor (MN4), a drain of the fourth NMOS transistor (MN4) is coupled to the drain of the second PMOS transistor (MP2).

In some embodiments, the first PMOS transistor comprises a parallel arrangement of K transistor elements (MP1-1, MP1-2, MP1-K), each transistor element arranged in series with a respective switch (S1-1, S1-2, S1-K). In some embodiments, the first NMOS transistor comprises a parallel arrangement of transistor elements (MN1-1, MN1-2, MN1-K), each transistor element arranged in series with a respective switch (S2-1, S2-2, S2-K). Embodiments of the touch sensor controller may be included in a touch panel.

In a second aspect, there is provided a method of calibrating a line driver for a touch panel, the line driver having a line driver output configured to be coupled to a row or column of a touch panel, the method comprising: providing a line drive current; providing a sense current related to the line drive current; digitizing the sense current to provide a plurality of digitized sense current values; determining an overload status dependent on the digitized sense current values; and controlling the line driver to adapt the line drive current dependent on the overload status.

In some embodiments, the method further comprises: averaging the digitized sense current values; detecting an overload when the average of digitized sense current values is below a minimum threshold value; detecting an overload when the average of digitized sense current values is above a maximum threshold value; determining an overload status in response to a number of overloads detected during a predetermined time period (T_AGC) exceeding a threshold overload value (OL_ACC_MAX); and increasing a gain of the line driver in response to an overload status being determined.

In some embodiments, the method further comprises adapting the line drive current by setting a gain value and wherein the sense current is proportional to a ratio of the line drive current and the gain value. In some embodiments, the method further comprises during a calibration time (i) setting the gain value of the line driver to an initial value; (ii) incrementing the gain value in response to an overload status being detected within a predetermined time period; and (iii) repeating step (ii) if a maximum gain value has not been reached.

### BRIEF DESCRIPTION OF THE DRAWINGS

In the figures and description like reference numerals refer to like features. Embodiments are now described in detail, by way of example only, illustrated by the accompanying drawings in which:
Figure 1A shows an example touch panel system,
Figure 1B shows a cross-section of the touch panel of the touch panel system of figure 1A.
Figure 2A shows a line driver and associated drive waveform.
Figure 2B shows a plot of the variation of drive current with respect to frequency.
Figure 2C illustrates a plot showing the effect of insufficient drive current.
Figure 3 Shows a touch sensor controller for a touch panel system according to an embodiment.
Figure 4A illustrates a line driver for a touch sensor controller according to an embodiment.
Figure 4B shows an implementation of transistors of the line driver of figure 4A having programmable gain factor.
Figure 5 shows a method of calibrating a line driver for a touch panel according to an embodiment.
Figure 6 illustrates an example chronograph of a calibration using the method of figure 5.
Figure 7 shows a method of calibration of a line driver in a touch panel controller according to an embodiment.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments.

### DETAILED DESCRIPTION OF EMBODIMENTS

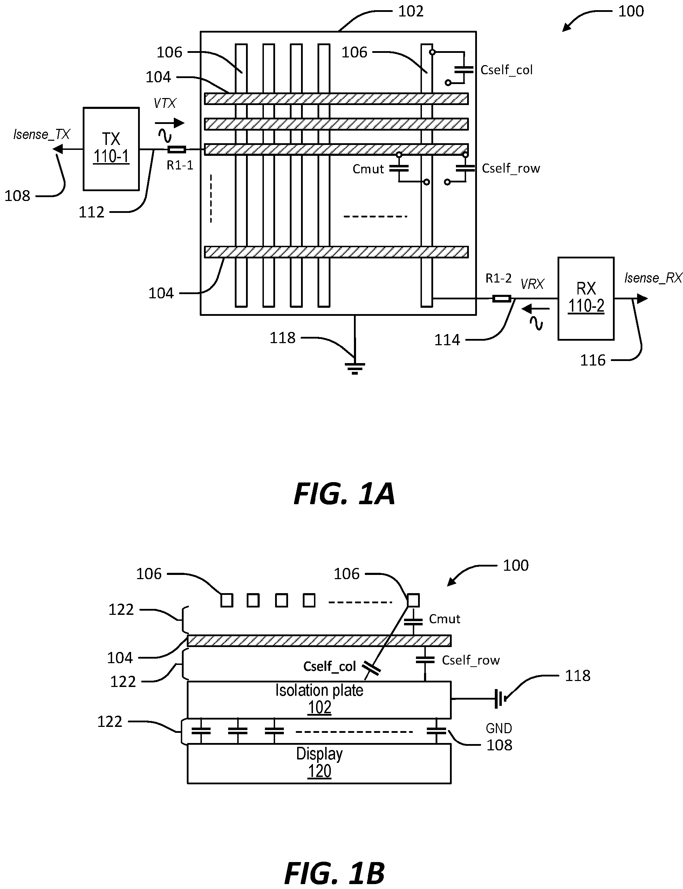

Figure 1A shows an example touch panel system 100 and figure 1B shows a cross section of the touch panel of the touch panel system 100. The touch panel system 100 includes a touch panel having an isolation plate 102, a number of rows 104 and columns 106 and a display 120 separated by insulation layers 122. A line driver (110-1, 110-2) is connected to each row and column. As illustrated only one line driver 110-1 is shown for a row and one line driver 110-2 for a column but it will be appreciated that each of the rows 104 and columns 106 has its own line driver. The row line driver 110-1 is denoted as a TX line driver and has an output 112 connected the row. In operation the row line driver 110-1 drives a waveform denoted VTX onto the row 104. A sense current Isense_TX which is output on the sense current output 108 corresponds to the current supplied to the respective row. Similarly, the column line driver 110-2 is denoted as a RX line driver and has an output 114 connected to a column 106. In operation the column line driver 110-2 drives a waveform denoted VRX onto the column 106. A sense current Isense_RX which is output on the sense current output 116 corresponds to the current supplied to the respective column 106. Each row 104 and column 106 of the touch panel has a self-capacitance denoted as Cself_row, Cself_col between the respective row 104 or column 106 and the isolation plate 102. As illustrated, the isolation plate 102 is connected to ground 118, but in some examples the ground connection to the isolation plate 102 may be omitted. The mutual capacitance between rows and columns is denoted C_mut. The resistances R1-1, R1-2 shown correspond to parasitic resistances representing the non-zero resistivity of connectors.

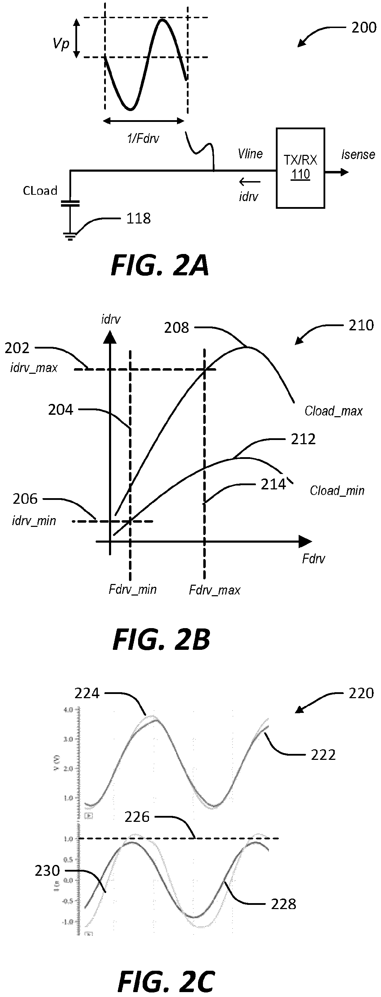

Turning now to figure 2A, which shows a line driver and associated drive waveform 200. Each line driver 110 drives a voltage amplitude Vline, having a peak voltage Vp and drive frequency Fdrv. The capacitive load driven by the line driver 110 is denoted Cload. Each line driver 110 is biased to deliver the peak current, given by |*idrv*| = 2*pi* * *Fdrv* * *Vp* * *Cload.*

Figure 2B shows a plot 210 of the variation of drive current Idrv on the y-axis with respect to frequency on the x-axis. The line 208 shows the variation for a maximum value of Cload and line 212 shows the variation for a minimum value of Cload. The drive frequency may vary between a minimum drive frequency Fdrv_min (line 204) and a maximum drive frequency Fdrv_max (line 214). The required drive current varies between a minimum value idrv_min (line 206) and a maximum value idrv_max (line 202).

The value of the Idrv increases proportionally with respect to Fdrv and Cload, up to the respective cut-off frequency of the row / column. The drive frequency Fdrv typically ranges from a few kHz to ~100 kHz. The peak voltage Vp is substantially constant. The load capacitance Cload typically varies from a few pF to a few tens of pF per cross point, depending on the touch panel material. The maximum drive current may be for example 100 times the minimum drive current dependent on the panel characteristics.

Figure 2C illustrates a plot 220 showing the effect of insufficient drive current. Line 222 shows the variation of voltage Vlin at a nominal load capacitance C_{load} and line 224 shows the variation of voltage Vₗᵢₙ at 2xC_{load}. Line 228 shows the variation of drive current Idrv at a nominal load capacitance C_{load} and line 230 shows the variation of drive current at 2xC_{load}. The maximum value of the output stage biasing current of the driver idrv_dc is shown as line 226.

Provided that idrv_dc is larger than the required idrv, then both Vline and idrv remain linear. However, when idrv_dc is too small, then the drive current has insufficient amplitude and the drive current and drive voltage clip as shown by lines 224, 230. The drive voltage is also affected by a slew rate effect. Hence, for a given value of Cload, the value of driver output bias current idrv_dc must be set to a sufficiently large value to avoid clipping. However, if idrv_dc is set for the maximum possible value of Cload, then the sense voltage Vsense will be extremely small for the smallest value of Cload, and the signal-to-noise ratio becomes unacceptable.

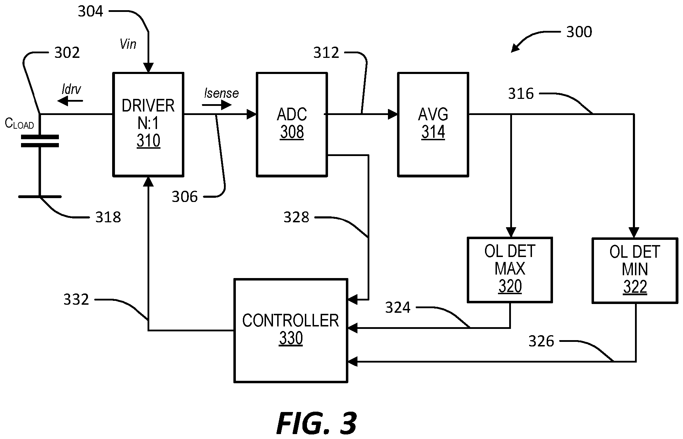

Figure 3 shows a touch panel controller 300 according to an embodiment. The touch panel controller may be implemented by hardware or a combination of hardware and software. The touch panel controller 300 includes a programmable line driver 310, analog-to-digital converter (ADC) 308, an averaging module 314, a maximum overload value detector 320, a minimum overload value detector 322, and a controller 330. The programmable line driver 310 has a driver output 302, a drive signal input 304, a sense output 306 and a drive current control input 332. The sense output 306 is connected to an input of the ADC 308. An ADC digital data output 312 is connected to an input of the averaging module 314. An ADC overflow output 328 is connected to a first controller input of the controller 330. An ADC data output 316 is connected to an input of the maximum overload value detector 320 and an input of the minimum overload value detector 322. A maximum overload detector output 324 is connected to a second input of the controller 330. A minimum overload detector output 326 is connected to a second input of the controller 330. The controller 330 has a control output connected to the drive current control input 332.

In operation, the line driver 310 may receive a drive signal from a drive signal generator (not shown) on the driver input 304. The driver may output a line drive signal on the line driver output 302. The line drive current Idrv may be determined by a variable value N set on the drive current control input 332. The controller 330 may set the value of N of the driver 310 during a calibration time dependent on the signals received from one or more of maximum overload detector 320, the minimum overload detector 322, and the overload detect output 328. The sense current Isense is proportional to the drive current Idrv/N and is digitized by the ADC 308 to provide digitized current sense values to the averaging module 314. The averaging module 314 may provide a moving average of the digitized sense current values. In some examples, the averaging module 314 may be a decimator which receives n-bits from the ADC at a sample rate fs and outputs n * p bits at a sample rate of fs/p. The maximum overload detector 320 may determine when the averaged output exceeds a maximum threshold value to determine when an overload condition may occur. Similarly, the maximum overload detector 322 may determine when the averaged output is less than a minimum threshold value to determine when an overload condition may occur. The ADC 308 may also directly provide an overflow indication to the controller 330 from the overflow output 328 when the maximum input value of Isense exceeds the range of the ADC 308.

The controller 330 may determine a value of N such that the Isense input signal to the ADC 308 is close to using the full scale without clipping. In some examples, the driver 310 may have a topology in which the sensed current is proportional and scales linearly with driver strength. The line driver 310 may be implemented to monotonically increase or decrease the gain of the drive current Idrv. The controller 330 may be implemented by hardware, software running on a microprocessor, or a combination of hardware and software.

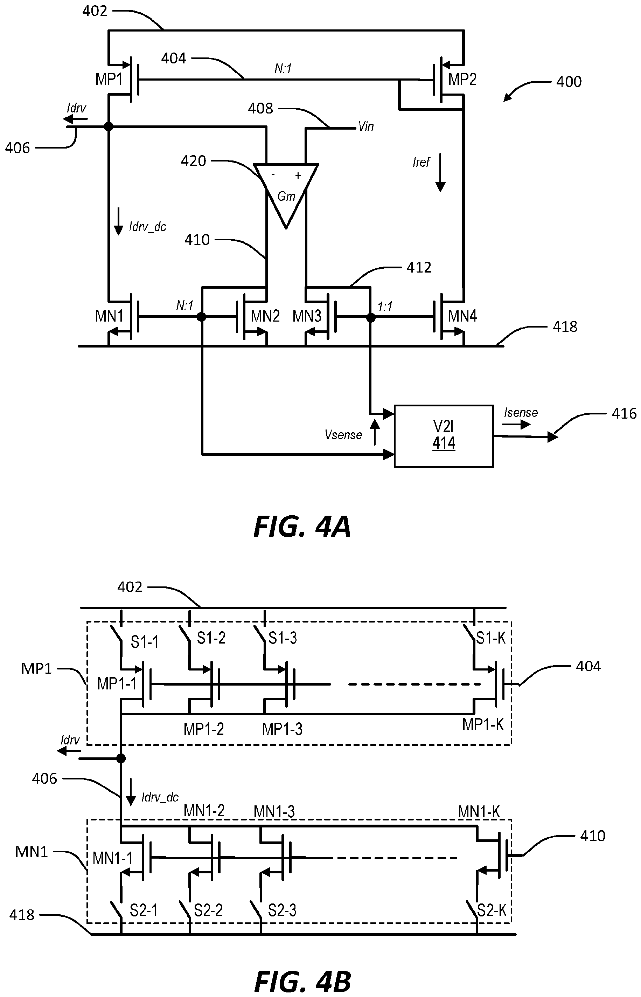

Figure 4A shows a line driver 400 according to an embodiment which may implement line driver 110, 310. The line driver 410 has a first current mirror including a first and second PMOS transistors MP1, MP2, a second current mirror including first and second NMOS transistors MN1, MN2, and a third current mirror including third and fourth NMOS transistors MN3, MN4. The line driver further includes an operational transconductance amplifier (OTA) 420 and a voltage to current conversion module 414.

The sources of the PMOS transistors MP1, MP2 are connected to a supply rail 402. The gates of PMOS transistors MP1 and MP2 and drain of PMOS transistor MP2 and NMOS transistor MN4 are connected to node 404. The line driver output 406 is connected to the drains of PMOS transistor MP1 and NMOS transistor MN1 and the inverting input of OTA 420. The non-inverting input of OTA 420 is connected to the drive signal input 408. The inverting output 410 of the OTA 420 is connected to the gates of NMOS transistors MN1, MN2, the drain of NMOS transistor MN2 and a first input of the voltage to current conversion module 414. The non-inverting input of OTA 420 is connected to the drive signal input 408. The non-inverting output 412 of the OTA 420 is connected to the gates of NMOS transistors MN3, MN4, the drain of NMOS transistor MN3 and a second input of the voltage to current conversion module 414. The sources of NMOS transistors MN1, MN2, MN3, MN4 are connected to a ground rail 418. The output of the voltage to current converter 414 is connected to the sense output 416.

The PMOS transistor MP1 has a programable gain factor which can be N times the gain factor β of PMOS transistor MP2. Similarly, the NMOS transistor MN1 has a variable gain factor which can be N times the gain factor of NMOS transistor MN2. The value of N can vary from 1 to K. An example implementation of transistors MP1, MN1 is shown in figure 4B. The first PMOS transistor MP1 has a parallel arrangement of K transistor elements MP1-1 to MP1-K. Each transistor element MP1-1 to MP1-K is connected in series via a respective switch S1-1 to S1-K to the supply rail 402. The switches S1 are controlled by the control input of the line driver (not shown). Switches S1 may be implemented using MOS transistors or other logic. The gain factor β of the transistor MP1 is the same as MP2 when one of the switches S1 is closed (i.e. N=1) and is K times the gain factor of MP2 when all switches S1 are closed (i.e. N=K).

Similarly, the first NMOS transistor MN1 has a parallel arrangement of K transistor elements MN1-1 to MN1-K where each transistor element is connected in series via a respective switch S2-1 to S2-K to the ground 418. The switches S2 are controlled by the control input of the line driver (not shown). Switches S2 may be implemented using MOS transistors or other logic. The gain factor of the transistor MN1 is the same as MN2 when one of the switches S2 is closed (i.e. N=1) and the gain factor is K times the gain factor of MN2 when all switches S2 are closed (i.e. N=K). The gain factors of MN3, MN4, are the same as MN2.

An example of the state of the switches S1 (S1-1, S1-2, S1-3, S1-K), S2 (S2-1, S2-2, S2-3, S2-K) for different values of N is shown in table 1 below. The condition where N=0 may be an unused state or used in a test mode for example to place the output stage in a high impedance state.

**Table 1**

| N | S1-1, S2-1 | S1-2, S2-2 | S1-3, S2-3 | S1-K, S2-K |
|---|---|---|---|---|
| 0 - test/unused | Open | Open | Open | Open |
| 1 | Closed | Open | Open | Open |
| 2 | Closed | Closed | Open | Open |
| 3 | Closed | Closed | Closed | Open |
| K | Closed | Closed | Closed | Closed |

A fixed reference current *Iref* is scaled by the first current mirror by a factor N to provide the DC driver bias current *Idrv dc.* The second and third current mirrors provide the bias current for the OTA 420 which has the same value as *Iref.* Consequently, the bias current is independent of the drive current. The sense voltage V*sense* is the voltage between the differential outputs 410, 412 of the OTA 420. The sense voltage is converted into a corresponding current Isense by the V2I module 414. It should be understood that line driver 400 is one example implementation. In other examples, the line driver may be implemented using other circuit configurations that allow the driver DC current to be adjusted to allow a monotonic change of the sensed signal with each gain step.

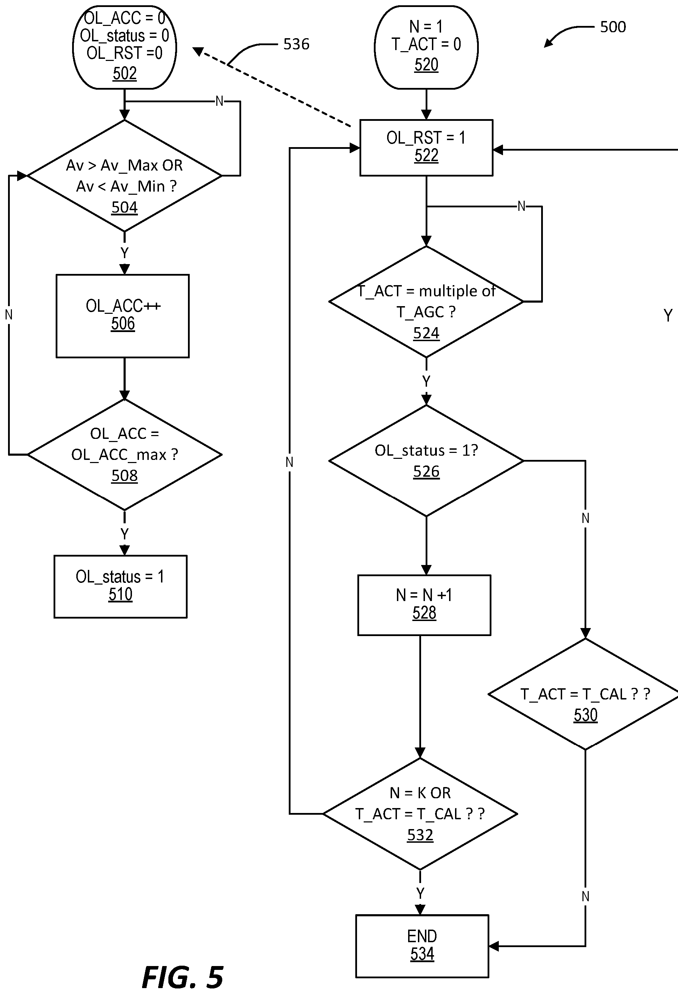

Figure 5 shows a method of calibrating a touch panel controller 500 according to an embodiment. Method 500 may be implemented for example touch by panel controller 300. It will be appreciated that in other implementations the logic values may be inverted with respect to the values described in method 500. The method 500 includes a first process starting at step 502 which is triggered by a reset signal (OL_RST) being asserted (OL_RST=1). In step 502, the values of an overload counter (OL ACC), the overload status (OL_status) and a reset signal (OL_RST) are set to logic 0. In step 504, the method checks whether the average of the digitized sense current values is greater than a predetermined maximum threshold value (Av_Max) or less than a predetermined minimum threshold value (Av_Min). If the average of the digitized sense current values is greater than the predetermined maximum threshold value (Av_Max) or less than a predetermined minimum threshold value (Av_Min), the method proceeds to step 506 and increments the overload counter. Otherwise, the method remains at step 504. Following from step 506, in step 508, the method checks whether the overload counter value is equal to a threshold overload value (OL_ACC_max). If the overload counter value is equal to the threshold overload value, then the overload status is set (OL_status = 1) in step 510 indicating an overload condition.

A second process running concurrently with the first process starts at step 520. The second process may be initiated by a system request to start the driver calibration. The second process adjusts the driver current of the line driver dependent on the overload status. In step 520 the value of N which determines the gain is set to an initial value of 1 corresponding to a minimum DC drive current value. In other examples, the initial value may be different to 1. The gain may be set by a controller, for example controller 330, setting the gain of the driver 310 via control input 318. For embodiments using the line driver 400, the effect of setting N to 1 may be that only transistor elements MP1-1 and MN1-1 are connected to the supply rail 402 or ground 418 as previously described. In step 522 a reset is asserted (OL_RST=1) and a calibration timer (T_ACT) may be reset/set to zero. which may trigger the first process to start shown by dashed line 536. Following from step 522, in step 524 the calibration timer value is compared with a predetermined time period for the automatic gain calibration time (T_AGC). Once the calibration timer value reaches an integer multiple of the automatic gain calibration time value, in step 526 the overload status is checked. If an overload status is set (OL_status = 1), the value of N is incremented in step 528. Following step 528, in step 532 a determination is made whether to continue checking by comparing T_ACT with a predefined calibration time duration T_CAL and comparing the current value of N with the maximum gain value K. If N = K or the calibration time T_CAL has been reached, the method ends (step 534). Otherwise, the method returns to step 522 and the cycle repeats. Returning to step 526, if the overload status is not set, then in step 530, a determination is made whether to continue checking by comparing T_ACT with the predefined calibration time duration T_CAL. If the calibration time has been reached the method ends (step 534), otherwise the method returns to step 522.

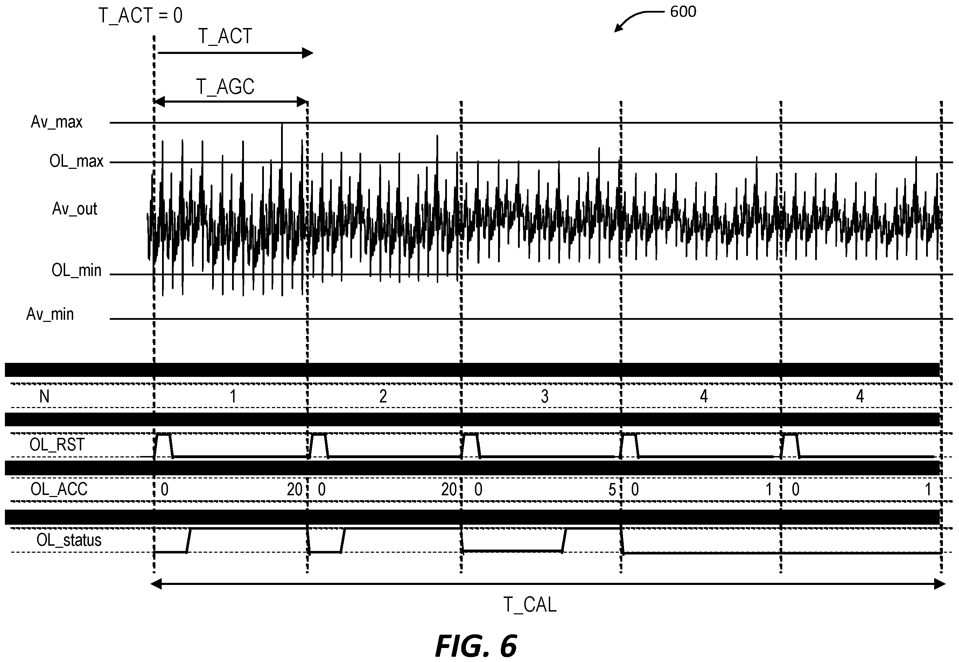

Figure 6 shows a chronogram 600 for an example calibration using method 500. For this example, the minimum value of N is 1 and the maximum number of overloads detected within a T_AGC time window is 3 so some overloads can be tolerated before the overload status is set. The lines Av_max and Av_min represent the maximum and minimum values possible provided from the averaging module 314. Method 500 adjusts the gain in increasing steps. In other embodiments the method may start at a maximum gain value (N=K) and decrease in steps until overloads are detected.

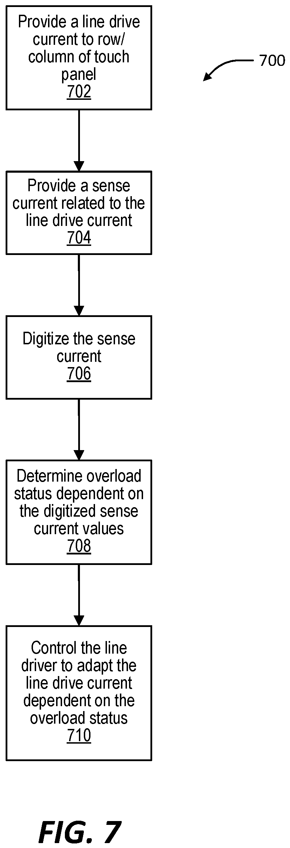

Figure 7 shows a method of calibration 700 of a line driver in a touch panel controller according to an embodiment. In step 702 a line drive current is provided by the line driver. In step 704, the line driver provides a sense current related to the line drive current. In step 706 the sense current signal is digitized. In step 708, an overload status is determined dependent on the digitized sense current values. In step 710, the line driver is controlled to adapt the line drive current dependent on the overload status. This adaptation may include monotonically increasing the output driver bias current from a minimum value until no overloads are detected or monotonically decreasing the output driver bias current from a maximum value until an overload status is detected.

A touch sensor controller including a line driver and a method of calibrating a line driver for a touch panel are described. The line driver is configured to be coupled to a row or column of a touch panel, the method includes providing a line drive current and providing a sense current related to the drive current. The sense current values are digitized, and an overload status determined dependent on the digitized sense current values. The line driver is controlled to increase or decrease the line drive current dependent on the overload status.

Embodiments described include a line driver topology and a calibration scheme which determines automatically the most optimized settings to apply for each line driver in a touch panel controller. This may eliminate the requirement to know the characteristics of the panel as the calibration is performed per panel.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub combination.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A touch sensor controller comprising:
a line driver having a line driver output configured to be coupled to a row or
column of a touch panel and to provide a line drive current and a sense current output configured to output a sense current related to the line drive current;
an analog to digital converter configured to receive the sense current and having a digital data output coupled to a controller, the digital data output configured to output a plurality of digitized sense current values;
wherein the controller has a control output coupled to a drive current control input of the line driver and is configured to:
determine an overload status dependent on the digitized sense current values; and
adapt the line drive current dependent on the overload status.

2. The touch sensor controller of claim 1, further comprising:
an averaging module configured to receive the digitized sense current values and output an average of the digitized sense current values;
a minimum overload detector configured to detect an overload when the average of digitized sense current values is below a minimum threshold value;
a maximum overload detector configured to detect an overload when the average of digitized sense current values is above a maximum threshold value; and wherein the controller is further configured to determine an overload status in response to a number of overloads detected during a predetermined time period exceeding a threshold overload value and increase a gain of the line driver in response to an overload status being determined.

3. The touch sensor controller of any preceding claim, wherein the analog to digital converter further comprises an overflow output coupled to the controller and wherein the controller is further configured to adapt the drive current dependent an overflow output value.

4. The touch sensor controller of any preceding claim wherein the controller is further configured to adapt the line drive current by setting a gain value and wherein the sense current is proportional to a ratio of the line drive current and the gain value.

5. The touch sensor controller of claim 4 when dependent on claim 2, wherein the controller is further configured, during a calibration time to:
(i) set a gain value of the line driver to an initial value;
(ii) increment the gain value in response to an overload status being detected within a predetermined time period; and
(iii) repeat step (ii) if a maximum gain value has not been reached.

6. The touch sensor controller of any preceding claim, wherein the line driver further comprises an operational transconductance amplifier, OTA, wherein a bias current for the OTA is independent of an output stage biasing current of the line driver.

7. The touch sensor controller of any preceding claim, wherein the line driver further comprises an operational transconductance amplifier, OTA, having a non-inverting input configured to be coupled to a drive signal generator, an inverting input coupled to the line driver output , and an inverting output and a non-inverting output coupled to a respective input of a voltage-to-current module.

8. The touch sensor controller of claim 7, wherein the line driver further comprises:
a first current mirror comprising a first PMOS transistor and a second PMOS transistor, wherein a gain factor of the first PMOS transistor is variable between 1 and N times the gain factor of the second PMOS transistor, a source of the first PMOS transistor and the second PMOS transistor is coupled to a supply rail, a drain of the first PMOS transistor is coupled to the line driver output, a drain of the second PMOS transistor is coupled to a gate of the first PMOS transistor and a gate of the second PMOS transistor;
a second current mirror comprising a first NMOS transistor and a second NMOS transistor, wherein the gain factor of the first NMOS transistor is variable between 1 and N times the gain factor of the second NMOS transistor a source of the first NMOS transistor and the second NMOS transistor is coupled to a ground rail, a drain of the first NMOS transistor is coupled to the line driver output, a drain of the second NMOS transistor is coupled to a gate of the first NMOS transistor, a gate of the second NMOS transistor and the inverting output of the OTA;
a third current mirror comprising a third NMOS transistor and a fourth NMOS transistor, a source of the third NMOS transistor and the fourth NMOS transistor is coupled to a ground rail, a drain of the third NMOS transistor is coupled to a non-inverting output of the OTA, a gate of the third NMOS transistor, and a gate of the fourth NMOS transistor, a drain of the fourth NMOS transistor is coupled to the drain of the second PMOS transistor.

9. The touch sensor controller of claim 8 wherein the first PMOS transistor comprises a parallel arrangement of K transistor elements, each transistor element arranged in series with a respective switch.

10. The touch sensor controller of claim 8 or 9 wherein the first NMOS transistor comprises a parallel arrangement of transistor elements, each transistor element arranged in series with a respective switch.

11. A touch panel comprising the touch sensor controller of any preceding claim.

12. A method of calibrating a line driver for a touch panel, the line driver having a line driver output configured to be coupled to a row or column of a touch panel, the method comprising:
providing a line drive current;
providing a sense current related to the line drive current;
digitizing the sense current to provide a plurality of digitized sense current values;
determining an overload status dependent on the digitized sense current values;
and
controlling the line driver to adapt the line drive current dependent on the overload status.

13. The method of claim 12, further comprising:
averaging the digitized sense current values;
detecting an overload when the average of digitized sense current values is below a minimum threshold value;
detecting an overload when the average of digitized sense current values is above a maximum threshold value;
determining an overload status in response to a number of overloads detected during a predetermined time period exceeding a threshold overload value; and
increasing a gain of the line driver in response to an overload status being determined.

14. The method of any of claims 12 to 13, further comprising adapting the line drive current by setting a gain value and wherein the sense current is proportional to a ratio of the line drive current and the gain value.

15. The method of any of claims 12 to 14, further comprising during a calibration time:
(i) setting the gain value of the line driver to an initial value;
(ii) incrementing the gain value in response to an overload status being detected within a predetermined time period; and
(iii) repeating step (ii) if a maximum gain value has not been reached.
